# EUROPEAN PATENT SPECIFICATION

(11) **EP 2 509 388 B1**
(45) Date of publication and mention of the grant of the patent: **17.05.2017**
(21) Application number: 12162290.6
(22) Date of filing: 29.03.2012
(51) Int. Cl.: H04W 84/12, H04W 16/26

(54) **System and method for providing wireless communication to a wind farm**
System und Verfahren zur Bereitstellung von drahtloser Kommunikation für Windparks
Système et procédé de fourniture de communication sans fil à un parc éolien

(30) Priority: 05.04.2011 US 201113080384
(43) Date of publication of application: 10.10.2012
(73) Proprietor: General Electric Company, Schenectady, NY 12345 (US)
(72) Inventor: Perigo, Donald Ray, Atlanta, GA Georgia 30339 (US)
(74) Representative: Bedford, Grant Richard

(56) References cited:
- WO-A2-2005/008938
- US-A1- 2010 146 087
- SANTHI KUMARAN ET AL: "Hybrid Wireless Mesh Network for Universal Access: Opportunities and Challenges", TELECOMMUNICATIONS (AICT), 2010 SIXTH ADVANCED INTERNATIONAL CONFERENCE ON, IEEE, PISCATAWAY, NJ, USA, 9 May 2010 (2010-05-09), pages 390-397, XP031693092, ISBN: 978-1-4244-6748-8

## Description

The field of the invention relates generally to providing wireless communication to a wind farm, within a turbine, and more particularly, to providing wireless communication to service areas surrounding a wind turbine.

A wind farm includes one or more wind turbines, which utilize wind energy to generate or produce electrical power. During the maintenance and/or repair of wind turbines within a wind farm, service technicians often have difficulty communicating locally or with a remote site due to a lack of cellular or wireless internet coverage. US 2010/0146087 describes a dynamic installation and uninstallation system for renewable energy wind farm hardware.

Santhi Kumaran et al: "Hybrid Wireless Mesh Network for Universal Access: Opportunities and Challenges", Telecommunications (AICT), 2010 Sixth Advanced International Conference On, IEEE, Piscataway, NJ, USA, 9 May 2010 (2010-05-09), pages 390-397, ISBN: 978-1-4244-6748-8 describes various applications and advantages of a hybrid wireless mesh network (HWMN).

Various aspects and embodiments of the present invention are defined by the appended claims.

Various aspects and embodiments of the present invention will now be described in connection with the accompanying drawings, in which:
FIG. 1 is a schematic view of an exemplary wind turbine.
FIG. 2 is a block diagram illustrating an exemplary system for providing wireless communication to a wind farm.
FIG. 3 is a flowchart of an exemplary method for configuring a system to provide wireless communication to a wind farm.

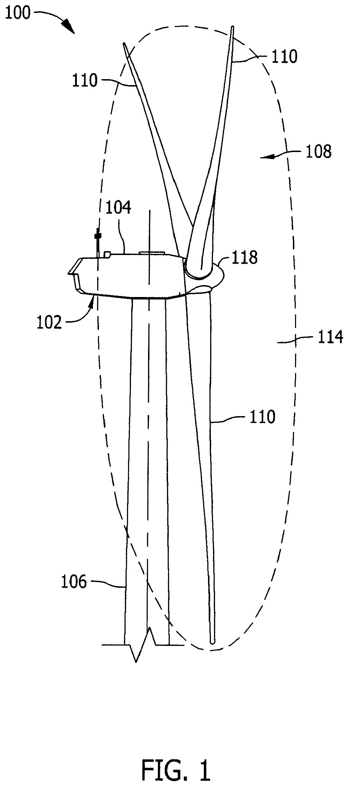

FIG. 1 is a schematic view of an exemplary wind turbine 100. Wind turbine 100 includes a nacelle 102 with a roof 104 housing a generator (not shown in FIG. 1). Nacelle 102 is mounted on a tower 106 extending to a pad (a portion of tower 106 being shown in FIG. 1). Tower 106 may be any height that facilitates operation of wind turbine 100 as described herein. Wind turbine 100 also includes a rotor 108 that includes rotor blades 110 attached to a rotating hub 112. Rotor blades 110 rotate in a substantially arcuate path or sweep area 114 defined by the area in which rotor blades 110 rotate around hub 112. Wind turbine 100 may include any number of rotor blades
110 that facilitate operation of wind turbine 100 as described herein. In the exemplary embodiment, wind turbine 100 includes a gearbox (not shown in FIG. 1) rotatingly coupled to rotor 108 and to the generator.

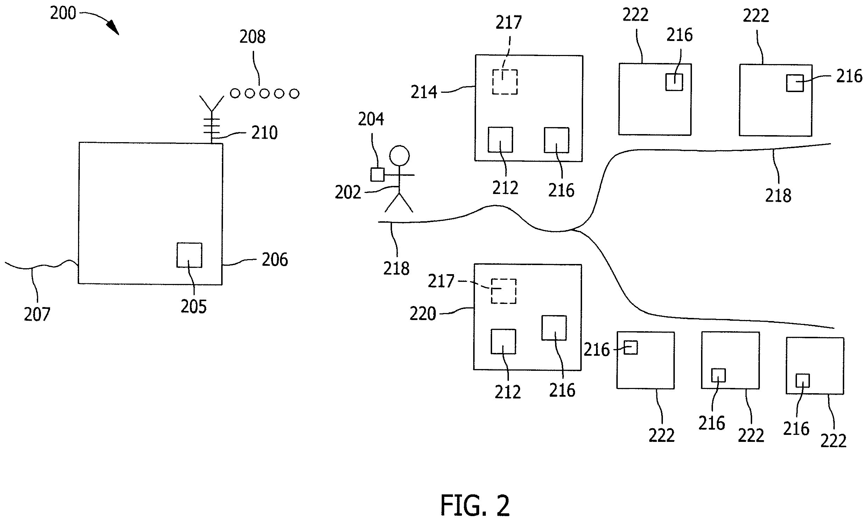

FIG. 2 is a block diagram illustrating an exemplary system 200 for providing wireless communication to a wind turbine 100 within a wind farm. In the exemplary embodiment, system 200 is designed to provide a user 202 wireless communication for a user computing device 204 when user 202 is at a wind farm. User computing device 204 is any device capable of bi-lateral data transfer and interaction with user 202. In some embodiments, user computing device 204 includes at least one presentation device capable of conveying information to user 202. The presentation device may include, without limitation, a display device (e.g., a liquid crystal display (LCD), organic light emitting diode (OLED) display, or "electronic ink" display) and/or an audio output device (e.g., a speaker or headphones). In some embodiments, the presentation device includes an output adapter, such as a video adapter and/or an audio adapter. An output adapter is operatively coupled to a processor and configured to be operatively coupled to an output device, such as a display device or an audio output device.

In some embodiments, computing device 204 includes an input device for receiving input from user 202. The input device may include, for example, a keyboard, a pointing device, a mouse, a stylus, a touch sensitive panel (e.g., a touch pad or a touch screen), a gyroscope, an accelerometer, a position detector, and/or an audio input device. A single component, such as a touch screen, may function as both an output device of the presentation device and the input device.

In the exemplary embodiment, base station 206 transmits a communications signal 208 by a base station antenna 210 to a wireless bridge 212 at a first parent wind turbine 214. In one embodiment, base station 206 and antenna 210 are communicatively coupled to a computing device 205 and a network communications link 207 that provides signal 208. Communications signal 208 can be any communications signal that enables a bi-lateral transmission of data including, but not limited to, a cellular phone technology (e.g., the Global Standard for Mobile communication (GSM)), radio frequency (RF), BLUETOOTH, an IEEE 802.11 standard (e.g., 802.11(g) or 802.11(n)), Worldwide Interoperability for Microwave Access (WIMAX), or any other suitable communication means. In one embodiment, base station antenna 210 is mounted to base station 206 and configured to transmit signal 208 at least twenty miles to bridge 212. In one embodiment, antenna 210 is a Cisco™ Aironet 1400 Series Wireless Bridge, commercially available from Cisco Systems Corporation headquartered in San Jose, California. Alternatively, antenna 210 can be any antenna or transmission device configured to transmit signal 208 any distance that enables communication at a wind farm as described herein.

In the exemplary embodiment, bridge 212 is a backhaul coupled to tower 106 (shown in FIG. 1) of first parent wind turbine 214. In the exemplary embodiment, bridge 212 is a Cisco™ 3500 Series Access Point commercially available from Cisco Systems Corporation headquartered in San Jose, California. Wireless bridge 212 receives and transmits signal 208 to an access point 216 mounted to an inner roof 104 of turbine 214. In an alternative embodiment, wireless bridge 212 is mounted at a base or on the exterior of tower 106 of turbine 214. In the exemplary embodiment, communication between wireless bridge 212 and access point 216 is provided using a wired network connection (e.g., Ethernet or an optical fiber). In one embodiment, a controller and switch 217 communicatively couple wireless bridge 212 and access point 216 to route signal 208 from bridge 212 to access point 216. Alternatively, communication between wireless bridge 212 and access point 216 is achieved wirelessly using an IEEE 802.11 standard (e.g., 802.11(g) or 802.11(n)), BLUETOOTH, or any other suitable wireless signal, such that wireless bridge 212 transmits signal 208 to access point 216.

Access point 216 broadcasts signal 208 throughout parent wind turbine 214. In one embodiment, access point 216 broadcasts signal 208 hemispherically throughout turbine 214 such that signal 208 extends to all components of turbine 214 including, but not limited to, nacelle 102, tower 106, blades 110, rotating hub 112, and sweep area 114. In one embodiment, access point 216 broadcasts signal 208 such that signal 208 extends to a wind farm service road 218, a second parent wind turbine 220, and an adjacent child wind turbine 222. In the exemplary embodiment, access point 216 broadcasts signal 208 1.2 miles surrounding turbine 214. In alternative embodiment, access point 216 broadcasts signal 208 two hundred feet surrounding turbine 214. Alternatively, access point 216 may broadcast signal 208 any distance and in any shape that enables communication at a wind farm as described herein.

Similar to first parent wind turbine 214, second parent wind turbine 220 and child wind turbines 222 have access point 216 coupled to each respective wind turbine 220 and 222. In the exemplary embodiment, first parent wind turbine 214 transmits signal 208 to access point 216 mounted in adjacent parent wind turbines, such as second parent wind turbine 220. In one embodiment, second parent wind turbine 220 includes wireless bridge 212 coupled to tower 106 (shown in FIG. 1) such that wireless bridge 212 is capable of receiving signal 208 from antenna 210. In such an embodiment, wireless bridge 212 is communicatively coupled to access point 216 and access point 216 is configured to transmit signal 208 to any parent wind turbines and any adjacent child wind turbines 222 should first parent wind turbine 214 lose communication with signal 208 from antenna 210.

Parent wind turbines 214 and 220 are configured to receive and transmit signal 208 from antenna 210 to access point 216 mounted in parent wind turbines 214 and 220 such that access point 216 extends signal 208 to any adjacent child wind turbine 222 and more specifically, to access point 216 mounted in each child wind turbine 222. Similarly, access point 216 within each child wind turbine 222 is configured to extend signal 208 to any adjacent child wind turbine 222.

Access point 216 mounted in turbines 220 and 222 is configured to broadcast signal 208 throughout turbine 214 such that signal 208 extends to all components of each turbine 220 and 222. In the exemplary embodiment, each child wind turbine 222 is communicatively coupled to a parent wind turbine and base station 206.

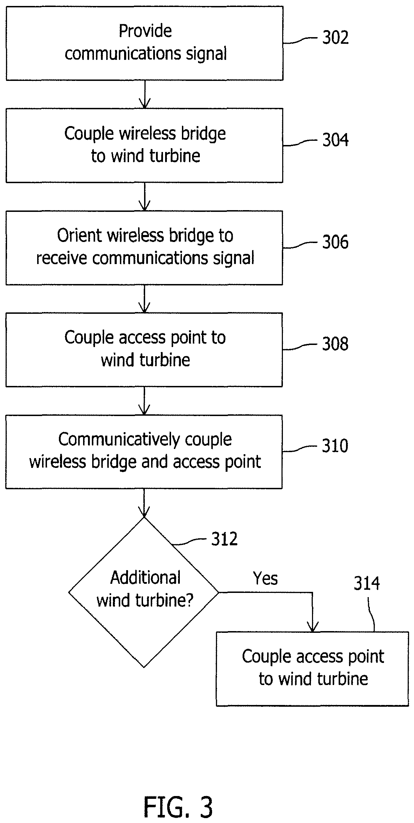

FIG. 3 is a flowchart of an exemplary method 300 for configuring a system to provide wireless communication to a wind farm. The method includes providing 302 communications signal 208 from antenna 210 at base 206. A wireless bridge 212 is coupled 304 to an exterior of first parent wind turbine 214. In one embodiment, wireless bridge 212 is coupled 304 to tower 106 of first parent wind turbine 214 at a location accessible to a user. For example, wireless bridge 212 can be positioned at a height of 8 feet from a base of tower 106, such that wireless bridge 212 is accessible to a user standing on a bed of a truck. Alternatively, wireless bridge 212 can be coupled 304 at any location on tower 106 that facilities providing wireless communication as described herein such as at a height of 40 feet from the base of tower 106. In the exemplary embodiment, wireless bridge 212 is oriented 306 such that communications signal 208 provided 302 from base 206 is received. In one embodiment, wireless bridge is oriented 306 to be in a direct line-of-sight with antenna 210. Wireless bridge 212 can be coupled 304 and oriented 306 anywhere on or inside first parent wind turbine 214 that provides a link between antenna 210 and wireless bridge 212 through signal 208.

In the exemplary embodiment, access point 216 is coupled 308 to turbine 214 near roof 104 of turbine 214. In one embodiment, access point 216 is coupled 308 and substantially aligned with a central vertical axis of tower 106. Coupling 308 access point 216 to be substantially aligned with a central vertical axis of tower 106 enables only one access point 216 to broadcast signal 208 through nacelle 102, tower 106, and rotor 108 to the ground and all areas serviceable by a user 202 monitoring and/or repairing wind turbine 100. Coupling 308 access point 216 to be substantially aligned with a central vertical axis of tower 106 enables signal 208 to be broadcast to all serviceable areas of wind turbine 100 by penetrating the harsh electromagnetic profile of wind turbine 100 and the components of wind turbine 100 that may block prevent wireless signals from being transmitted throughout wind turbine 100. In the exemplary embodiment, wireless bridge 212 and access point 216 are communicatively coupled within turbine 214. In such an embodiment, a wired connection is made from both wireless bridge 212 and access point 216 to controller and switch 217, such that signal 208 received from wireless bridge 212 is routed to access point 216 by switch 217.

If a determination is made 312 that additional wind turbines should receive signal 208, an access point 216 is coupled 314 near to each additional wind turbine 100 near roof 104 of each additional wind turbine 100. As described above, first parent wind turbine 214 extends signal 208 to other parent wind turbines, such as second wind turbine 220 and each parent wind turbine extends signal 208 to adjacent child wind turbines 222. Child wind turbines 222 repeat signal 208 such that a wireless communications signal 208 is available at each turbine within a wind farm.

Various of the embodiments described herein provide a method for providing wireless communication to a wind farm. A user performing maintenance and/or repair of wind turbines within a wind farm will be provided a wireless communications signal such that information can be transferred bi-laterally with a remote location to provide the user with information that will enable the maintenance and/or repair of the wind turbine to be more efficient.

Exemplary embodiments of a wind farm wireless communications system are described above in detail. The wireless communications system and wind turbine are not limited to the specific embodiments described herein, but rather each component may be utilized independently and separately from other components described herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (200) for providing wireless communication to a user computing device (204) at a first wind turbine (214) within a wind farm, said first wind turbine (214) including a tower (106), a nacelle (102), a rotor (108) and a plurality of rotor blades (110) defining a sweep area (114), the system (200) comprising:
a communications network source (207) for providing a wireless signal (208) from a communications network;
a wireless bridge (212) coupled to an exterior of the first wind turbine (214) configured to receive the wireless communication signal (208); and **characterised by**:
a wireless access point (216) coupled to the first wind turbine (214) at a location of the first wind turbine (214) including at least one of a roof (104), at a base, and the tower (106), the wireless access point (216) being communicatively coupled to the wireless bridge (212) and configured to transmit the wireless signal (208) to at least one user computing device within an access area of the first wind turbine (214), the access area including an interior of the tower (106) and the nacelle (102), and the sweep area; and wherein the wireless access point (216) is substantially aligned with a central vertical axis of the tower (106) such that only one access point (216) is able to broadcast the signal (208) through the nacelle (102), tower (106) and rotor (108) to the ground and areas serviceable by a user (202) monitoring and/or repairing the first wind turbine (214).

2. A system (200) in accordance with claim 1, wherein the wireless bridge (212) is a back haul.

3. A system (200) in accordance with any preceding claim, wherein the wireless access point (216) is configured to transmit the signal at least 60m (200 feet) around the first wind turbine (214).

4. A system (200) in accordance with any preceding claim, further comprising a second wireless access point (216) coupled to a second wind turbine (222), the second wireless access point (216) communicatively coupled to the wireless access point (216).

5. A system (200) in accordance with claim 4, wherein the second wireless access point (216) is configured to transmit the wireless signal (208) to at least one user computing device within an access area of the second wind turbine (222), the access area including an interior of a tower and a nacelle, and a sweep area thereof.

6. A system (200) in accordance with claim 4 or claim 5, wherein the second wireless access point (216) is configured to transmit the wireless signal (208) at least 60m (200 feet) around the second wind turbine (222).

7. A system (200) in accordance with claim 4, 5 or 6, further comprising a third wireless access point (216) coupled to a third wind turbine (222), the third wireless access point (216) communicatively coupled to the second access point (216) and configured to transmit the wireless signal (208) to at least one user computing device within an access area of the second wind turbine (222), the access area including an interior of a tower and a nacelle, and a sweep area thereof.

## Patentansprüche

1. System (200) zum Zuführen von drahtloser Kommunikation zu einem Benutzerrechengerät (204) an einer ersten Windturbine (214) innerhalb eines Windparks, wobei die erste Windturbine (214) einen Turm (106), eine Gondel (102), einen Rotor (108) und mehrere Rotorblätter (110) enthält, die einen Schwungbereich (114) definieren, das System (200) umfassend:
eine Kommunikationsnetzquelle (207) zum Zuführen eines drahtlosen Signals (208) von einem Kommunikationsnetz;
eine drahtlose Brücke (212), die an eine Außenseite der ersten Windturbine (214) gekoppelt ist und zum Empfangen des drahtlosen Kommunikationssignals (208) konfiguriert ist; und **gekennzeichnet durch**:
einen drahtlosen Zugangspunkt (216), der an einem Standort der ersten Windturbine (214), welcher zumindest eines von einem Dach (104), an einer Basis, und den Turm (106) enthält, an die erste Windturbine (214) gekoppelt ist, wobei der drahtlose Zugangspunkt (216) kommunikationstechnisch an die drahtlose Brücke (212) gekoppelt ist und zum Übertragen des drahtlosen Signals (208) an zumindest ein Benutzerrechengerät innerhalb eines Zugangsbereichs der ersten Windturbine (214) konfiguriert ist, wobei der Zugangsbereich eine Innenseite des Turms (106) und der Gondel (102) und den Schwungbereich umfasst; und wobei der drahtlose Zugangspunkt (216) im Wesentlichen derart an einer Vertikalachse des Turms (106) ausgerichtet ist, dass nur ein Zugangspunkt (216) zum Rundsenden des Signals (208) **durch** die Gondel (102), den Turm (106) und den Rotor (108) zum Boden und zu Bereichen imstande ist, die **durch** einen Benutzer (202) wartungsfähig sind, der die erste Windturbine (214) überwacht und/oder repariert.

2. System (200) nach Anspruch 1, wobei die drahtlose Brücke (212) ein Rücktransport ist.

3. System (200) nach einem der vorhergehenden Ansprüche, wobei der drahtlose Zugangspunkt (216) zum Übertragen des Signals zumindest 60 m (200 Fuß) um die erste Windturbine (214) herum konfiguriert ist.

4. System (200) nach einem der vorhergehenden Ansprüche, ferner umfassend einen zweiten drahtlosen Zugangspunkt (216), der an eine zweite Windturbine (222) gekoppelt ist, wobei der zweite drahtlose Zugangspunkt (216) kommunikationstechnisch an den drahtlosen Zugangspunkt (216) gekoppelt ist.

5. System (200) nach Anspruch 4, wobei der zweite drahtlose Zugangspunkt (216) zum Übertragen des drahtlosen Signals (208) an zumindest ein Benutzerrechengerät innerhalb eines Zugangsbereichs der zweiten Windturbine (222) konfiguriert ist, wobei der Zugangspunkt eine Innenseite eines Turms und einer Gondel und einen Schwungbereich davon enthält.

6. System (200) nach einem der Ansprüche 4 oder 5, wobei der zweite drahtlose Zugangspunkt (216) zum Übertragen des drahtlosen Signals (208) zumindest 60 m (200 Fuß) um die zweite Windturbine (222) herum konfiguriert ist.

7. System (200) nach einem der Ansprüche 4, 5 oder 6, ferner umfassend einen dritten drahtlosen Zugangspunkt (216), der an eine dritte Windturbine (222) gekoppelt ist, wobei der dritte drahtlose Zugangspunkt (216) kommunikationstechnisch an den zweiten Zugangspunkt (216) gekoppelt ist und zum Übertragen des drahtlosen Signals (208) an zumindest ein Benutzerrechengerät innerhalb eines Zugangsbereichs der zweiten Windturbine (222) konfiguriert ist, wobei der Zugangsbereich eine Innenseite eines Turms und einer Gondel und einen Schwungbereich davon beinhaltet.

## Revendications

1. Système (200) pour fournir une communication sans fil à un dispositif informatique d'utilisateur (204) dans une première éolienne (214) au sein d'un parc éolien, ladite première éolienne (214) comprenant un mât (106), une nacelle (102), un rotor (108) et une pluralité de pales de rotor (110) définissant une zone de balayage (114), le système (200) comprenant :
une source de réseau de communications (207) pour fournir un signal sans fil (208) à partir d'un réseau de communications ;
un pont sans fil (212) couplé à l'extérieur de la première éolienne (214) et configuré pour recevoir le signal de communication sans fil (208) ; et **caractérisé par** :
un point d'accès sans fil (216) couplé à la première éolienne (214) à un emplacement de la première éolienne (214) comprenant au moins l'un(e) parmi un toit (104), au niveau d'une base, et le mât (106), le point d'accès sans fil (216) étant couplé en communication avec le pont sans fil (212) et configuré pour transmettre le signal sans fil (208) à au moins un dispositif informatique d'utilisateur dans une zone d'accès de la première éolienne (214), la zone d'accès comprenant l'intérieur du mât (106) et de la nacelle (102) ainsi que la zone de balayage ; et dans lequel le point d'accès sans fil (216) est sensiblement aligné sur un axe vertical central du mât (106) de sorte que seul un point d'accès (216) soit à même de diffuser le signal (208) à travers la nacelle (102), le mât (106) et le rotor (108) vers la terre et des zones desservies par un utilisateur (202) contrôlant et/ou réparant la première éolienne (214).

2. Système (200) selon la revendication 1, dans lequel le pont sans fil (212) est un dispositif backhaul.

3. Système (200) selon l'une quelconque des revendications précédentes, dans lequel le point d'accès sans fil (216) est configuré pour transmettre le signal à au moins 60 m (200 pieds) autour de la première éolienne (214).

4. Système (200) selon l'une quelconque des revendications précédentes, comprenant en outre un deuxième point d'accès sans fil (216) couplé à une deuxième éolienne (222), le deuxième point d'accès sans fil (216) étant couplé en communication avec le point d'accès sans fil (216).

5. Système (200) selon la revendication 4, dans lequel le deuxième point d'accès sans fil (216) est configuré pour transmettre le signal sans fil (208) à au moins un dispositif informatique d'utilisateur dans une zone d'accès de la deuxième éolienne (222), la zone d'accès comprenant l'intérieur d'un mât et d'une nacelle et sa zone de balayage.

6. Système (200) selon la revendication 4 ou la revendication 5, dans lequel le deuxième point d'accès sans fil (216) est configuré pour transmettre le signal sans fil (208) à au moins 60 m (200 pieds) autour de la deuxième éolienne (222).

7. Système (200) selon la revendication 4, 5 ou 6, comprenant en outre un troisième point d'accès sans fil (216) couplé à une troisième éolienne (222), le troisième point d'accès sans fil (216) étant couplé en communication avec le deuxième point d'accès (216) et configuré pour transmettre le signal sans fil (208) à au moins un dispositif informatique d'utilisateur dans une zone d'accès de la deuxième éolienne (222), la zone d'accès comprenant l'intérieur d'un mât et d'une nacelle et sa zone de balayage.
